# EUROPÄISCHE PATENTSCHRIFT

(11) **EP 4 431 265 B1**
(45) Veröffentlichungstag und Bekanntmachung des Hinweises auf die Patenterteilung: **12.08.2026**
(21) Anmeldenummer: 23162345.5
(22) Anmeldetag: 16.03.2023
(51) Int. Cl.: B29C 65/32, B29C 65/22, B29L 31/00, B29L 23/00, B29L 23/20

(54) **VERFAHREN UND VORRICHTUNG ZUR HERSTELLUNG VON FLEXIBLEN TUBENKÖRPERN FÜR VERPACKUNGSTUBEN**
METHOD AND DEVICE FOR PRODUCING FLEXIBLE TUBE BODIES FOR PACKAGING TUBES
PROCÉDÉ ET DISPOSITIF DE FABRICATION DE CORPS TUBULAIRES FLEXIBLES POUR TUBES D'EMBALLAGE

(43) Veröffentlichungstag der Anmeldung: 18.09.2024
(73) Patentinhaber: PackSys Global AG, 8630 Rüti (CH)
(72) Erfinder: Läubli, Julius, 8645 Jona (CH)
(74) Vertreter: Patent- und Rechtsanwälte Behrmann Wagner PartG mbB

(56) Entgegenhaltungen:
- EP-A1- 2 829 381

## Beschreibung

Die vorliegende Erfindung betrifft eine Vorrichtung zur Herstellung von flexiblen Tubenkörpern für Verpackungstuben nach dem Oberbegriff des Anspruchs 1.

Weiterhin betrifft die vorliegende Erfindung ein Verfahren zur Herstellung von flexiblen Tubenkörpern für Verpackungstuben mit den Merkmalen des Oberbegriffs des Anspruchs 6.

Aus dem Stand der Technik sind bereits verschiedene Vorrichtungen und Verfahren bekannt, um aus einem bogenförmigen Foliensubstrat, welches mindestens eine verschweißbare Kunststoffschicht aufweist oder aus dieser besteht, eine Röhre oder Endlosröhre herzustellen, indem die Längsrandseiten des Kunststofflaminats auf Stoß zueinander oder leicht überlappend zueinander angeordnet werden und damit das bogenförmige Laminat zu einer Rohrform umgeformt wird. Durch einen Verbindungsprozess, beispielsweise einen Schweißprozess, werden dann die Längsrandseiten miteinander verbunden, insbesondere miteinander verschweißt, und so zunächst ein Endlosrohr hergestellt.

Auf dieses Endlosrohr kann, beispielsweise zur Verbesserung der Rundheit, noch eingewirkt werden, bevor es abgelängt oder zerschnitten wird, um gleichmäßige, bevorzugt zylindrische Tubenkörper mit einer bestimmten Länge bereitzustellen. Diese Tubenkörper können im nachfolgenden Herstellungsprozess von Verpackungstuben vorteilhaft mit einer Tubenschulter und/oder einem Tubenkopf verbunden werden, der ggf. wiederum einen Deckel trägt oder an dem ein Deckel befestigbar ist. Oftmals werden die Tubenkörper an dem nicht mit dem Tubenkopf oder der Tubenschulter verbundenen Ende zunächst nicht verschlossen oder bleiben unverschlossen, um eine rückwärtige Befüllung der Verpackungstube zu ermöglichen. Das offene Ende kann nach einer Befüllung durch Ausbilden einer weiteren Naht verschlossen werden.

Die Ausbildung der Längsschweißnaht entlang und zur Verbindung der Längsrandseiten des Foliensubstrats ist im Herstellungsprozess und auch für die Vorrichtung zur Herstellung der Tubenkörper ein kritischer Moment und eine anspruchsvolle verfahrenstechnische Handlung. Einerseits sollen optisch möglichst wenig auffällige oder wenig sichtbare Längsschweißnähte erzeugt werden. Gleichzeitig sollen die Längsschweißnähte ausreichend stabil und so ausgebildet sein, dass der zu befüllende oder der zu bevorratende Stoff und die Tuben nicht in nachteilhafte Wechselwirkung treten.

Im Stand der Technik hat es sich dabei, unabhängig von der Anordnung der Längsrandseiten auf Stoß oder mit Überlappung, weitestgehend etabliert, die Verschweißung der Längsrandseiten dadurch zu bewirken, dass eine Erwärmung oder eine Erhitzung der Längsrandseiten von außen sowie von innen des zur Rohrform umgeformten Foliensubstrats bereitgestellt wird. Besonders vorteilhaft hat sich dabei die Verwendung von, bevorzugt endlos umlaufenden und angetriebenen, Kontaktbändern etabliert, zwischen denen die Längsrandseiten aufgenommen und während des Transports oder Mittransports zwischen den Längsrandseiten erhitzt und ggf. mit Druck beaufschlagt werden, um dadurch ein wenigstens partielles Aufschmelzen der Längsrandseiten und die Ausbildung einer Längsschweißnaht zu ermöglichen.

Als Heizmechanismus für solche Kontaktbänder, insbesondere ein inneres Kontaktband und ein äußeres Kontaktband, haben sich dabei in der Vergangenheit im Stand der Technik induktives Heizen oder entsprechende Induktionsheizeinrichtungen etabliert, die bevorzugt über entsprechende Induktionsspulen der Induktionsheizeinrichtungen, die statisch gegenüber den Kontaktbändern angeordnet sind, die, bevorzugt wenigstens teilweise metallischen, Kontaktbänder lokal erhitzen, bevorzugt indem über induktive Energieübertragung die notwendige Erwärmung des Kontaktbandes bewirken.

Die induktive Erwärmung der Kontaktbänder hat den Vorteil, dass hohe Heizraten erreicht werden, was u.a. wieder eine kompakte Bauweise und einen hohen Durchsatz der entsprechenden Vorrichtungen erlaubt. Weiterhin sind die Induktionsheizeinrichtungen zur Erwärmung der Kontaktbänder vorteilhaft, weil wenig beheizte Masse gegeben ist und somit einerseits ein effektives, insbesondere energieeffektives, Heizen möglich ist, und andererseits beim Abschalten der Anlage nur wenig erwärmte Masse abgekühlt werden muss, was ein schnelles Abkühlen ermöglicht.

Bei den Induktionsheizeinrichtungen wurde bisher jedoch eine räumliche Trennung in Transportrichtung der Kontaktbänder vorgesehen, um zu verhindern, dass die Induktionsheizeinrichtungen, insbesondere die darin vorgesehenen Induktionsspulen oder Heizspulen, sich gegenseitig beeinflussen oder beeinträchtigen.

Dies bringt den Nachteil mit sich, dass in der Regel entlang der Transportrichtung zunächst das innere Kontaktband mit einer Induktionsheizeinrichtung beheizt wird, die Beheizung jedoch in einem Zustand oder in einem räumlichen Bereich stattfindet, in dem noch kein Foliensubstrat, insbesondere keine Längsrandseiten des Foliensubstrats, auf dem inneren Kontaktband anliegen oder aufliegen oder aber die Vorrichtung entsprechend räumlich verlängert wenn das Foliensubstrat im bereits auf dem inneren Kontaktband anliegen soll. In einem in Transportrichtung weiter hinten angeordneten Bereich wird dann über entsprechende Induktionsheizeinrichtungen das Außenband oder äußere Kontaktband erhitzt. Diese Erwärmung findet in der Regel in einem Bereich der Kontaktbänder und der Transportrichtung statt, in dem die Längsrandseiten des Foliensubstrats die Bänder bereits kontaktieren. Durch die vorgeschaltete Anordnung der Induktionsheizeinrichtung des Innenbandes und aufgrund der geringen Masse und dadurch begrenzten Möglichkeit zur Wärmespeicherung führt diese räumlich getrennte Anordnung der Induktionsheizeinrichtungen jedoch dazu, dass das innere Kontaktband sehr stark oder bis zu einer verhältnismäßig hohen Temperatur, beispielsweise auf 300°C und mehr am Punkt der (inneren) Induktionsheizeinrichtung erwärmt werden muss, um im Bereich der Kontaktbänder, in dem die Erwärmung der Längsrandseiten des Foliensubstrats stattfindet und die Ausbildung der Längsschweißnaht erfolgt, noch warm genug zu sein oder genügend Energie aufzuweisen, um die Längsrandseiten, zumindest partiell, von innen aufzuschmelzen.

Dies führt jedoch dazu, dass das innere Kontaktband an einer definierten Stelle des Endlosbandes und bei einer vollständigen Umdrehung zunächst von einer Raum- oder Umgebungstemperatur der Vorrichtung beim Passieren der Induktionsheizeinrichtung auf eine entsprechend hohe Temperatur, beispielsweise 300°C, erwärmt wird, um schlussendlich wieder auf Raumtemperatur abzukühlen. Diese hohen Temperatursprünge oder Temperaturrampen mit oberen Grenzwerten, die deutlich oberhalb der Temperatur liegen, die grundsätzlich zur Ausbildung der Längsschweißnaht notwendig sind, führen nicht nur dazu, dass das Metallgefüge des inneren Kontaktbandes mit der Betriebsdauer verändert wird, sondern führen auch zu entsprechend starken Verschleißerscheinungen und sind damit ein wesentlicher, limitierender Faktor bezüglich der Lebensdauer der besagten inneren Kontaktbänder.Außerdem führt die verhältnismäßig starke Erwärmung des inneren Kontaktbandes zu einem erhöhten hohen Energieverbrauch. Ein Verlängern der Induktionsheizeinrichtung für das innere Kontaktband führt zu einer Verlängerung der ganzen Vorrichtung, insbesondere auch bezüglich des aufwendig herzustellenden Dorns.

Aus der EP 2 829 381 A1 ist eine Schweißvorrichtung zum Herstellen von Tubenrohrkörpern mit einem ersten und zweiten Kontaktband bekannt, wobei ein Kontaktband eine Polymidin-Kontaktfläche zur Anlage an die Substratbahn aufweist und die Kontaktbänder durch Induktion beheizbar sind.

Ausgehend von diesem Stand der Technik besteht die Aufgabe der vorliegenden Erfindung darin, die Nachteile im Stand der Technik zu überwinden und insbesondere ein Verfahren und eine Vorrichtung zur Herstellung von flexiblen Tubenkörpern für Verpackungstuben vorzuschlagen, bei denen trotz des Vorsehens von Induktionsheizeinrichtungen die Lebensdauer der Kontaktbänder, insbesondere des inneren Kontaktbandes, vergrößert und eine bessere Energieeffizienz erreicht wird und zudem die Vergrößerung/Verlängerung der Vorrichtung verhindert wird.

Diese Aufgabe wird im Hinblick auf eine Vorrichtung zur Herstellung von flexiblen Tubenkörpern für Verpackungstuben mit den Merkmalen des Anspruchs 1 gelöst. Die Aufgabe wird weiterhin durch ein Verfahren zur Herstellung von flexiblen Tubenkörpern für die Herstellung von Verpackungstuben mit den Merkmalen des Anspruchs 6 gelöst.

Vorteilhafte Ausführungsformen der Erfindung sind Gegenstand der nachfolgenden Beschreibung, der Figurenbeschreibung, der Figuren sowie der Unteransprüche.

Grundsätzlich sollen nachfolgend alle vorrichtungsmäßig offenbarten und beanspruchten Merkmale auch als entsprechend verfahrensmäßig offenbart und beanspruchbar gelten, und umgekehrt.

Bei der erfindungsgemäßen Vorrichtung zur Herstellung von flexiblen Tubenkörpern für Verpackungstuben aus einem, bevorzugt auf einer Außenseite eine Bedruckung aufweisenden, Foliensubstrat, welches mindestens eine verschweißbare Kunststoffschicht aufweist oder aus dieser besteht und welches eine sich in einer Längsrichtung erstreckende erste Längsrandseite und eine hierzu parallele und beabstandete zweite Längsrandseite umfasst, ist vorgesehen, dass die Vorrichtung Umformmittel aufweist, um das Foliensubstrat zu einer Rohrform umzuformen und ferner ein äußeres und ein inneres, bevorzugt umlaufend angetriebenes, besonders bevorzugt einen metallischen Werkstoff, ggf. mit entsprechenden Beschichtungen, aufweisendes, Kontaktband umfasst, wobei zwischen dem äußeren Kontaktband und dem inneren Kontaktband die beiden Längsrandseiten zur Führung und/oder zur Ausbildung einer Längsschweißnaht aufgenommen werden und zusammen mit den Kontaktbändern in einer Transportrichtung mitgenommen oder mittransportiert werden, wobei dem äußeren und dem inneren Kontaktband zugeordnete, jeweilige Induktionsheizeinrichtungen vorgesehen sind. Gemäß der Erfindung ist zudem vorgesehen, dass eine dem inneren Kontaktband zugeordnete Induktionsheizeinrichtung in Transportrichtung wenigstens teilweise überlappend mit einer dem äußeren Kontaktband zugeordneten Induktionsheizeinrichtung angeordnet ist.

Die Zuordnung der Induktionsheizeinrichtungen zu den Kontaktbändern soll vorteilhaft über räumliche Nähe erreicht werden, zum Beispiel dadurch, dass die jeweilige Induktionsheizeinrichtung, bevorzugt entsprechend umfasste Induktoren auf einer von den Längsrandseiten abgewandten Seite des jeweiligen Kontaktbandes benachbart zu dem Kontaktband angeordnet ist. Die Induktionsheizeinrichtung kann bevorzugt eine Energieversorgungseinheit aufweisen, die Induktoren mit elektrischer Energie versorgt. Die Induktoren können Induktionsspulen oder Heizspulen aufweisen, mit denen ein elektromagnetisches Induktionsfeld erzeugt und aufrecht erhalten werden kann.

Die vorliegende Erfindung hat in überraschender Weise erkannt, dass es, anders als bisher angenommen, durchaus möglich ist, die Induktionsheizeinrichtungen des inneren Kontaktbandes und des äußeren Kontaktbandes in Transportrichtung zumindest teilweise überlappend anzuordnen, ohne dass dadurch die Funktion einer Induktionsheizeinrichtung von der jeweils anderen Induktionsheizeinrichtung durch die entsprechend generierten Induktionsfelder gestört oder ansonsten nachteilig beeinflusst werden. Dies führt wiederum dazu, dass die Erwärmung der Kontaktbänder, insbesondere die Erwärmung des inneren Kontaktbandes, räumlich und in Transportrichtung deutlich näher oder sogar vollständig in dem Bereich stattfinden kann, in dem die Längsrandseiten des Foliensubstrats bereits zwischen den Kontaktbändern angeordnet sind oder in Bereichen angeordnet werden kann, in denen tatsächlich die Längsschweißnaht erzeugt oder ausgebildet werden soll. Dadurch kann wiederum erreicht werden, dass das innere Kontaktband deutlich weniger stark erwärmt werden muss und dadurch die Temperaturgradienten oder Temperaturrampen des inneren Kontaktbandes viel geringer oder flacher ausfallen und zudem eine geringere Höchsttemperatur benötigt wird. Dadurch wird der Verschleiß des inneren Kontaktbandes minimiert und zudem eine energieeffiziente Ausbildung der Längsschweißnaht erreicht.

Außerdem wurde erkannt, dass die erfindungsgemäße Anordnung der Induktionsheizeinrichtungen in räumlich wenigstens teilweiser Überlappung in Transportrichtung auch vorteilhafte Auswirkungen auf die ausgebildete Längsschweißnaht ausüben, insbesondere im Hinblick auf das Erscheinungsbild der Längsschweißnaht in Umfangsrichtung.

In einer ersten vorteilhaften Ausführungsform der Vorrichtung kann vorgesehen sein, dass ein Teil der dem inneren Kontaktband zugeordneten Induktionsheizeinrichtung in Transportrichtung vor der dem äußeren Kontaktband zugeordneten Induktionsheizeinrichtung angeordnet ist. Dies kann besonders vorteilhaft mit einem weiteren, überlappenden Teil der dem inneren Kontaktband zugeordneten Induktionsheizeinrichtung realisiert werden. Denn in der Regel werden Längsschweißnähte mit besonders guten Eigenschaften erreicht, wenn das innere Kontaktband mehr Energie auf die Längsrandseiten des Foliensubstrats überträgt. Durch eine Anordnung der dem inneren Kontaktband zugeordneten Induktionsheizeinrichtung teilweise vor der Induktionsheizeinrichtung des äußeren Kontaktbandes und teilweise überlappend mit der Induktionsheizeinrichtung des äußeren Kontaktbandes kann dementsprechend vorteilhaft eine entsprechend große Menge an Energie induktiv von der Induktionsheizeinrichtung an das innere Kontaktband übertragen werden, ohne dass eine zu starke Erhitzung des Kontaktbandes resultiert. Dies kann auch dann besonders vorteilhaft eingesetzt werden, wenn zusätzlich zu dem Foliensubstrat ein Streifen zum Einsatz kommt, der beispielsweise auf der Innenseite des zur Rohrform umgeformten Foliensubstrats im Bereich der Längsrandseiten und/oder im Bereich der Längsschweißnaht angeordnet ist/wird und eine Abdeckung oder Versiegelung der Schweißnaht nach innen bewirkt oder bereitstellt.

Auch dann ist es besonders vorteilhaft, wenn auf der Innenseite oder auf der Seite des inneren Kontaktbandes entsprechend mehr Energie oder Wärme zur Verfügung steht, um ggf. auch den Streifen zu erwärmen und/oder partiell aufzuschmelzen.

In einer weiteren, besonders vorteilhaften Ausgestaltung der Vorrichtung kann vorgesehen sein, dass sich die dem inneren Kontaktband zugeordnete Induktionsheizeinrichtung in Transportrichtung über die gesamte Länge der dem äußeren Kontaktband zugeordneten Heizeinrichtung erstreckt. Dadurch kann in vorteilhafter Weise die Ausdehnung der Vorrichtung oder der benötigte Bauraum der Vorrichtung in Transportrichtung minimiert werden. Besonders vorteilhaft können die beiden Induktionsheizeinrichtungen in Transportrichtung an etwa der gleichen Position enden. Entgegen der Transportrichtung kann, wie vorausgehend bereits dargelegt, vorgesehen sein, dass die dem inneren Kontaktband zugeordnete Induktionsheizeinrichtung über die dem äußeren Kontaktband zugeordnete Induktionsheizeinrichtung übersteht oder verlängert ausgebildet ist.

Erfindungsgemäß ist vorgesehen, dass die dem inneren Kontaktband und die dem äußeren Kontaktband zugeordnete Induktionsheizeinrichtung jeweils eine Heizspule aufweisen, die von unabhängigen, bevorzugt von der Vorrichtung umfassten, Wechselstromgeneratoren gespeist werden, wobei die jeweiligen Induktions- oder Heizspulen ein Teil eines Parallelschwingkreises ausbilden. Es hat sich herausgestellt, dass bei der Anordnung von entsprechenden Generatoren und Induktions- oder Heizspulen in einem Parallelschwingkreis die Störanfälligkeit oder die Störfestigkeit der jeweils anderen, gegenüberliegenden Induktionsheizeinrichtung und der dortigen Induktions- oder Heizspule oder dem dortigen Generator deutlich gegenüber einer Anordnung in einem seriellen Schwingkreis verbessert werden kann. Dadurch wird es noch besser möglich, die Induktionsheizeinrichtungen der beiden Kontaktbänder teilweise oder vollständig überlappend in Transportrichtung anzuordnen.

Eine weitere, ebenfalls besonders bevorzugte Variante der Vorrichtung kann vorsehen, dass der Generator, der die Induktions- oder Heizspule der Induktionsheizeinrichtung des inneren Kontaktbandes speist, dazu eingerichtet ist oder so mit einer, bevorzugt von der Vorrichtung umfassten, Steuereinrichtung wirkverbunden ausgebildet ist, dass eine eineinhalb bis fünffach höhere Leistung in das innere Kontaktband eingekoppelt wird als in das äußere Kontaktband. Wie oben bereits beschrieben, kann es vorteilhaft sein, das innere Kontaktband stärker zu erwärmen oder mit mehr Energie zu versorgen als das äußere Kontaktband. Über eine entsprechend lange Erstreckung der dem inneren Kontaktband zugeordneten Induktionsheizeinrichtung kann erreicht werden, dass der Temperaturanstieg und die Energieübertragung in moderaten Maßen bleiben. Trotzdem oder gleichermaßen ist es besonders vorteilhaft, den Generator entsprechend auszugestalten oder anzusteuern, sodass insgesamt und/oder unabhängig von der räumlichen Ausdehnung der Induktionsheizeinrichtung des inneren Kontaktbandes in Transportrichtung eine entsprechend höhere, bevorzugt eine eineinhalb bis fünffach höhere elektrische Energie an das innere Kontaktband übertragen wird als bei dem benachbarten oder gegenüberliegenden, äußeren Kontaktband.

In einer weiteren, ebenfalls besonders vorteilhaften Ausführungsform der Vorrichtung kann zudem vorgesehen sein, dass eine Steuereinrichtung vorgesehen ist, die die Generatoren zum Betrieb der Induktionsheizeinrichtungen zur Kompensation von Interferenzen zwischen den Induktions- oder Heizspulen der Induktionsheizeinrichtungen statisch oder dynamisch steuernd ausgebildet ist.

Je nachdem, wie die Generatoren und die Heizspulen/Induktionsheizeinrichtungen miteinander zusammenwirken, können unterschiedliche Methoden und Maßnahmen zur statischen oder dynamischen Ansteuerung der Generatoren sinnvoll sein, um die gegenseitige Beeinflussung der Heizspulen, durch Induktionsfelder der jeweils anderen Heizpule, zu minimieren oder vollständig zu eliminieren.

Die oben genannte Aufgabe wird auch mit einem Verfahren zur Herstellung von flexiblen Tubenkörpern für Verpackungstuben, bevorzugt mit einer Vorrichtung nach einer der vorangehend beschriebenen Ausführungsformen, gelöst, wobei die Verpackungstuben aus einem bevorzugt auf einer Außenseite eine Bedruckung aufweisenden Foliensubstrat hergestellt werden, welches mindestens eine verschweißbare Kunststoffschicht aufweist oder aus dieser besteht und bei dem das Foliensubstrat eine sich in Längsrichtung erstreckende erste Längsrandseite und eine hierzu parallele und beabstandete zweite Längsrandseite aufweist, wobei mit Umformmitteln das Foliensubstrat zu einer Rohrform umgeformt wird und die Längsrandseiten überlappend oder auf Stoß aneinander angeordnet zwischen einem äußeren und einem inneren, bevorzugt umlaufend angetriebenen, besonders bevorzugt einen metallischen Werkstoff aufweisenden, Kontaktband aufgenommen werden und während des Transports des Foliensubstrats und/oder der Längsrandseiten zwischen den Kontaktbändern in einer Transportrichtung eine induktive Erwärmung, bevorzugt über den Kontaktbändern zugeordneten Induktionsheizeinrichtungen, der Kontaktbänder die Ausbildung einer Längsschweißnaht der Längsrandseiten erfolgt, wobei erfindungsgemäß beim Transport der Längsrandseiten zwischen den Kontaktbändern entlang der Transportrichtung wenigstens zeitweise und/oder in Transportrichtung abschnittsweise gleichzeitig eine induktive Erwärmung des inneren und des äußeren Kontaktbandes durch die den jeweiligen Kontaktbändern zugeordneten Induktionsheizeinrichtungen stattfindet.

Wie oben bereits beschrieben, kann durch ein entsprechendes Verfahren sowohl auf Vorteile der induktiven Heizung der Kontaktbänder zurückgegriffen werden und gleichzeitig die Vorteile einer moderaten Erwärmung, insbesondere des inneren Kontaktbandes, sowie die Vorteile im Hinblick auf die ausgebildete Längsschweißnaht genutzt oder verwirklicht werden.

Die zeitweise oder abschnittsweise gleichzeitige induktive Erwärmung soll sich dabei erfindungsgemäß auf jeweils einen festen Punkt entlang der aneinander oder übereinander angeordneten Längsrandseiten des Foliensubstrats beziehen, sodass zumindest zeitweise oder abschnittsweise dieser Punkt oder Bereich der Längsrandseiten über die Induktionsheizeinrichtungen gleichzeitig, nämlich bezogen auf die Rohrform von innen und von außen, erwärmt wird, indem induktiv Energie auf die Kontaktbänder, beispielsweise einen metallischen Kern der Kontaktbänder, übertragen wird.

Erfindungsgemäß ist vorgesehen, dass Induktions- oder Heizspulen der Induktionsheizeinrichtungen mit unterschiedlichen Frequenzen, nämlich Resonanzfrequenzen eines Parallelschwingkreises, betrieben werden. Wie oben bereits ausgeführt, sind Parallelschwingkreise besonders vorteilhaft, um gegenseitige Beeinflussungen der Generatoren zu vermeiden oder zu minimieren. Weiterhin kann durch eine geeignete Wahl der Kapazitäten, insbesondere Kondensatoren, der Parallelschwingkreise eine entsprechende Resonanzfrequenzwahl des jeweiligen Parallelschwingkreises der Induktionsheizeinrichtung des äußeren Kontaktbandes und der Induktionsheizeinrichtung des inneren Kontaktbandes vorgenommen werden und somit besonders vorteilhaft eine gegenseitige Beeinflussung verhindert werden. Beispielsweise kann das Verhältnis der Resonanzfrequenzen im Bereich zwischen 1,7 und 2,7 liegen, wobei die Resonanzfrequenzen erfindungsgemäß so gewählt werden, dass sie nicht im Verhältnis von Brüchen stehen, deren Zähler und Nenner kleine ganze Zahlen aufweisen, um Lock-In-Effekten vorzubeugen.

Alternativ ist ein gleichphasiger Betrieb von der Induktions- oder Heizspulen der inneren und äußeren Induktionsheizeinrichtung denkbar, sofern die Resonanzfrequenzen beider Schwingkreise sehr nahe beieinander liegen bzw. im Idealfall identisch sind.

In einer weiteren, besonders vorteilhaften Variante des Verfahrens kann zudem vorgesehen sein, dass das innere Kontaktband so erwärmt wird, dass es an keinem Punkt eine Temperatur aufweist, die oberhalb von 230°C, bevorzugt nicht oberhalb von 210°C, liegt.

Wie einleitend bereits beschrieben, kommt es zu einem erhöhten und verstärkten Verschleiß, wenn das, bevorzugt umlaufend angetriebene, insbesondere auf einem metallischen Kern aufgebaute, innere Kontaktband bei jeder Umdrehung und bei jedem Passieren der Induktionsheizeinrichtung eine steile und große Temperaturrampe durchläuft und anschließend wieder auf nahezu Raumtemperatur abkühlt. Dementsprechend kann mit der vorteilhaften Ausgestaltung erreicht werden, dass zwar genügend Energie bereitsteht, um die Ausbildung der Längsschweißnaht zu bewirken, gleichzeitig jedoch das innere Kontaktband überhitzt oder zu stark erwärmt wird, sodass eine besonders lange Lebensdauer oder Laufzeit ermöglicht wird. Dies wird erfindungsgemäß dadurch unterstützt oder ermöglicht, dass die Erwärmung des inneren Kontaktbandes möglichst nah an oder sogar unmittelbar in dem Bereich stattfindet, in dem auch die tatsächliche Ausbildung der Längsschweißnaht erfolgt, nämlich wenigstens teilweise überlappend mit der Anordnung der gegenüberliegenden, dem äußeren Kontaktband zugeordneten, Induktionsheizeinrichtung.

In einer weiteren, besonders wünschenswerten Variante des Verfahrens kann vorgesehen sein, dass durch die Induktionsheizeinrichtung, die dem inneren Kontaktband zugeordnet ist, eine eineinhalbfach bis fünffach höhere elektrische Leistung in das innere Kontaktband eingekoppelt wird als durch die Induktionsheizeinrichtung, die dem äußeren Kontaktband zugeordnet ist und Energie bzw. Leistung in das äußere Kontaktband einkoppelt. Dadurch kann in besonders vorteilhafter Weise eine technisch funktionelle sowie optisch qualitativ hochwertige Längsschweißnaht ausgebildet werden. Gleichzeitig kann vorteilhaft auch die Einbettung oder das Anheften eines inneren Streifens ermöglicht werden.

Selbstverständlich kann auch in allen Ausführungen der vorliegenden Erfindung ein dem Stand der Technik entsprechender, zusätzlicher Streifen von außen in das Innere des zum Rohr umgeformten zugeführt werden, beispielsweise, um die Naht zusätzlich zu verstärken.

Vorteilhafte Ausführungsformen der vorliegenden Erfindung werden nachfolgend beispielhaft anhand der lediglich schematischen Zeichnungen beschrieben. Darin zeigen:
- Fig. 1:: einen Ausschnitt aus einer gattungsgemäßen Vorrichtung zur Herstellung von flexiblen Tubenkörpern für Verpackungstuben;
- Fig. 2:: einen Ausschnitt aus einer erfindungsgemäßen Vorrichtung in einer ersten Ausführungsform,
- Fig. 3:: einen Ausschnitt aus einer erfindungsgemäßen Vorrichtung in einer zweiten Ausführungsform;
- Fig. 4:: einen Ausschnitt aus einer erfindungsgemäßen Vorrichtung in einer dritten Ausführungsform.

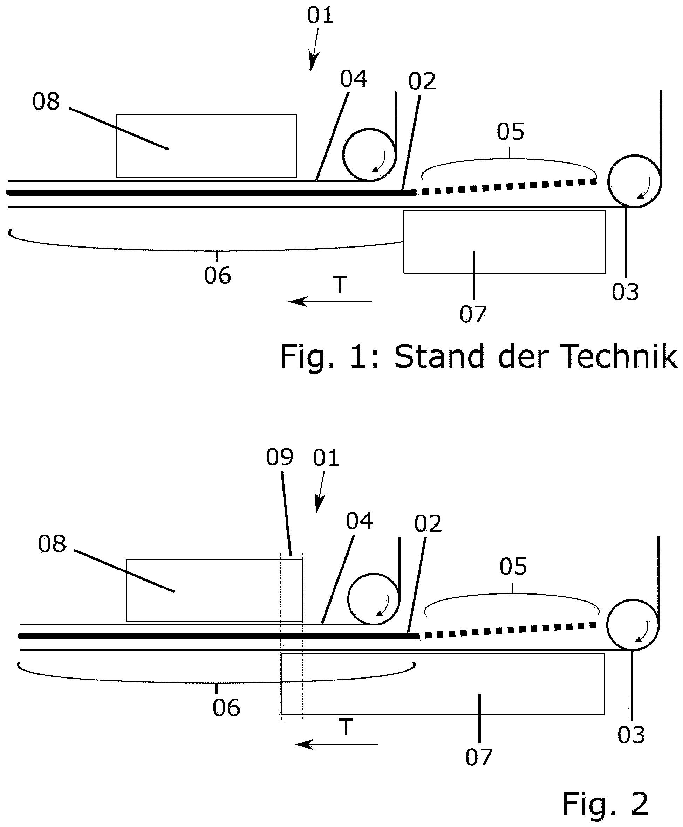

Die Fig. 1 zeigt einen Ausschnitt aus einer Vorrichtung 01 gemäß dem Stand der Technik.

Die Vorrichtung umfasst neben nicht dargestellten Umformmitteln zum Umformen eines Foliensubstrats 02 zu einer Rohrform ein inneres Kontaktband 03 sowie ein äußeres Kontaktband 04. Von den Kontaktbändern 03, 04 sind lediglich Ausschnitte dargestellt. Bevorzugt sind die Kontaktbänder 03, 04 als umlaufend angetriebene Metall-Endlosbänder ausgebildet, die bevorzugt über Antihaft-Beschichtungen verfügen.

In der Fig. 1 ist bereits dargestellt, dass in Transportrichtung T das endlos oder lückenlos angelieferte Foliensubstrat 02 in einem Anordnungsbereich 05 zur Rohrform umgeformt wird das Foliensubstrat 02, insbesondere die Längsrandseiten des Foliensubstrats 02, aber noch nicht mit dem inneren Kontaktband 03 oder dem äußeren Kontaktband 04 in Kontakt kommen oder zur Anlage kommen. Dies wird durch die punktierte Darstellung des Foliensubstrats 02 im Anordnungsbereich 05 verdeutlicht.

Im Übergang zwischen dem Anordnungsbereich 05 und einem Überlappbereich 06 werden dann die nicht im Detail gezeigten Längsrandseiten des Foliensubstrats auf Stoß aneinander,überlappend zueinander oder mit einem geringen Abstand zueinander, der dann durch einen Materialeintrag, zum Beispiel von einem Verstärkungsstreifen, gefüllt wird zwischen den Kontaktbändern 03, 04 aufgenommen und beim weiteren Transport entlang der Transportrichtung T wird die Längsschweißnaht im Bereich der Längsrandseiten des Foliensubstrats 02 ausgebildet. Dazu wird das innere Kontaktband 03 über eine innere Induktionsheizeinrichtung 07 beheizt. Das äußere Kontaktband 04 wird dementsprechend über eine äußere Induktionsheizeinrichtung 08 erhitzt.

Im Zusammenhang mit der vorliegenden Offenbarung soll bevorzugt davon ausgegangen werden können, dass eine Induktionsheizeinrichtung 07, 08, die einem entsprechenden Kontaktband 03, 04 zugeordnet ausgebildet ist, eine solche räumliche Anordnung aufweist, dass einerseits eine induktive Energieübertragung und Erwärmung des jeweiligen Kontaktbandes möglich ist, ohne dass die Beförderung oder der Transport des Foliensubstrats 02 behindert oder gestört wird. Im Beispiel der Fig. 1 bedeutet dies, dass die Induktionsheizeinrichtungen 07, 08 jeweils auf einer von den Längsrandseiten des Foliensubstrats abgewandten Seite des entsprechenden Kontaktbandes 03, 04 angeordnet sind.

In der Fig. 1 mit einer Vorrichtung 01 gemäß des Stands der Technik ist die dem inneren Kontaktband 03 zugeordnete Induktionsheizeinrichtung 07 in Transportrichtung T vollständig vor der dem äußeren Kontaktband 04 zugeordneten Induktionsheizeinrichtung 08 angeordnet. Dadurch können in einfacher Weise gegenseitige Beeinflussungen der Induktionsheizeinrichtungen 07, 08 verhindert werden, weil die entsprechenden Induktionsfelder räumlich weitestgehend getrennt sind, nämlich durch die Beabstandung in Transportrichtung T. Um im Überlappungsbereich 06 jedoch genügend Energie oder Wärme bereitzustellen, dass die Längsschweißnaht ausgebildet werden kann, muss das innere Kontaktband 03 durch die Induktionsheizeinrichtung 07 im Anordnungsbereich 05 entsprechend stark aufgeheizt werden, weil das innere Kontaktband 03 den Bereich der Induktionsheizeinrichtung 07 und damit die Möglichkeit zur Aufnahme von weiterer Energie oder zum Halten der erreichten Temperatur bereits verlässt, bevor das Foliensubstrat 02 in den Überlappungsbereich 06 eintritt.

In der Fig. 2 ist eine erfindungsgemäße Ausgestaltung dargestellt, bei der Komponenten mit gleicher Funktion, wie im Stand der Technik, mit gleichen Bezugszeichen versehen sind. Der erfindungsgemäße Unterschied ist darin zu sehen, dass die Induktionsheizeinrichtung 07 in Transportrichtung T nunmehr einen Überlappungsbereich 09 mit der Induktionsheizeinrichtung 08 ausbildet und die Induktionsheizeinrichtung 07 damit sowohl im Anordnungsbereich 05 als auch im Überlappbereich 06 angeordnet ist. Auch wenn dies in der nicht maßstabsgetreuen Skizze der Fig. 2 nicht ohne weiteres erkennbar ist, führt die erfindungsgemäße Anordnung der Induktionsheizeinrichtung 07 dazu, dass die Vorrichtung 01 in Transportrichtung T kann nicht verlängert oder vergrößert wird, obwohl eine entsprechen bessere/vorteilhafte Erwärmung erreicht wird. Zudem kann das innere Kontaktband 03 im Hinblick auf den Zeitpunkt oder den Bereich, in dem die Längsschweißnaht ausgebildet wird, länger beheizt werden. Mit anderen Worten ausgedrückt bedeutet dies, dass das innere Kontaktband 03 durch die teilweise überlappende Anordnung der Induktionsheizeinrichtungen 07, 08 weniger oder weniger stark auskühlt oder abkühlt, bis die Ausbildung der Längsschweißnaht im Überlappungsbereich 06 ausgebildet und abgeschlossen ist. Dies wiederum führt zu dem Vorteil, dass das innere Kontaktband 03 insgesamt weniger stark oder auf eine geringere Maximaltemperatur erhitzt werden muss, wodurch der Verschleiß merklich gesenkt oder der Verbrauch der notwendigen elektrischen Energie ebenfalls merklich gesenkt werden kann.

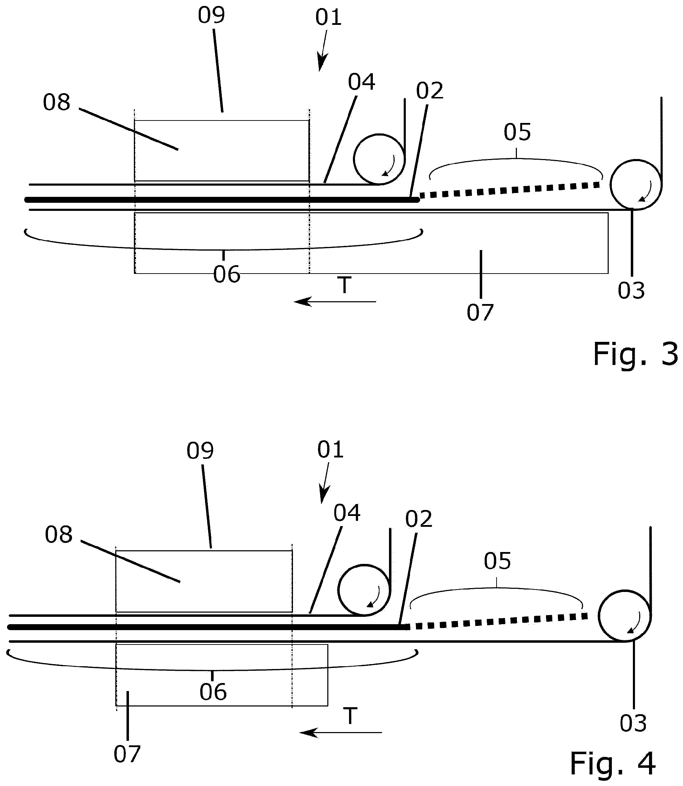

In der Fig. 3 ist eine alternative Ausführungsform vorgesehen, bei der die Induktionsheizeinrichtungen 07 und 08 so ausgebildet sind, dass die Induktionsheizeinrichtung 07, die dem inneren Kontaktband 03 zugeordnet ist, sich über die gesamte Länge der Induktionsheizeinrichtung 08 in Transportrichtung T erstreckt.

Dadurch kann die Länge der Vorrichtung 01 in Transportrichtung T im Wesentlichen konstant gehalten werden und trotzdem die Maximaltemperatur und/oder der Energieeintrag in das innere Kontaktband 03 weiter gesenkt werden.

Eine weitere Ausführungsform ist in der Fig. 4 dargestellt. Dort erstreckt sich die Induktionsheizeinrichtung 07 ebenfalls über die gesamte Länge der Induktionsheizeinrichtung 08 in Transportrichtung T. Die Induktionsheizeinrichtung 07 ist aber, im Vergleich zur Ausführungsform der Fig. 3, deutlich kompakter in Transportrichtung T ausgebildet. Dies kann, je nach Art des herzustellenden Tubenkörpers und verarbeitetem Foliensubstrat, vorteilhaft sein, ohne dass dies zu einer größeren Länge der Vorrichtung 01 in Transportrichtung T führt.

### Bezugszeichenliste

- 01: Vorrichtung
- 02: Foliensubstrat
- 03: inneres Kontaktband
- 04: äußeres Kontaktband
- 05: Anordnungsbereich
- 06: Überlappungsbereich
- 07: innere Induktionsheizeinrichtung
- 08: äußere Induktionsheizeinrichtung
- 09: Überlappungsbereich

- T: Transportrichtung

## Patentansprüche

1. Vorrichtung zur Herstellung von flexiblen Tubenkörpern für Verpackungstuben aus einem, bevorzugt auf einer Außenseite eine Bedruckung aufweisenden, Foliensubstrat (02), welches mindestens eine verschweißbare Kunststoffschicht aufweist oder aus dieser besteht und welches eine eine sich in eine Längsrichtung erstreckende erste Längsrandseite und eine hierzu parallele und beabstandete zweite Längsrandseite umfasst, wobei die Vorrichtung Umformmitteln aufweist, um das Foliensubstrat (02) zu einer Rohrform umzuformen und wobei die Vorrichtung (01) ferner ein äußeres (04) und ein inneres (03), bevorzugt umlaufend angetriebenes, Kontaktband (03, 04) umfasst, zwischen denen die beiden Längsrandseiten zur Führung und/oder Erwärmung zur Ausbildung einer Längsschweißnaht aufgenommen werden und in einer Transportrichtung (T) mitgenommen werden, wobei dem äußeren (04) und dem inneren Kontaktband (03,) zugeordnete, jeweilige Induktionsheizeinrichtungen (07, 08) vorgesehen sind,
wobei eine dem inneren Kontaktband (03) zugeordnete Induktionsheizeinrichtung (07, 08) in Transportrichtung wenigstens teilweise überlappend mit einer dem äußeren Kontaktband (04) zugeordneten Induktionsheizeinrichtung (07, 08) angeordnet ist, wobei die dem inneren Kontaktband (03) und die dem äußeren Kontaktband (04) zugeordnete Induktionsheizeinrichtung (07, 08) jeweils eine Heizspule aufweist,
**dadurch gekennzeichnet,**
**dass** die Heizspulen von unabhängigen Wechselstromgeneratoren gespeist werden, wobei die jeweiligen Induktions- oder Heizspulen jeweils einen Teil eines Parallelschwingkreises ausbilden und in Resonanz betrieben werden, wobei die Resonanzfrequenzen so gewählt werden, dass sie nicht im Verhältnis von Brüchen stehen, deren Zähler und Nenner kleine ganze Zahlen aufweisen.

2. Vorrichtung nach Anspruch 1,
**dadurch gekennzeichnet,**
**dass** ein Teil der dem inneren Kontaktband (03) zugeordneten Induktionsheizeinrichtung (07) in Transportrichtung (T) vor der dem äußeren Kontaktband (04) zugeordneten Induktionsheizeinrichtung (08) angeordnet ist.

3. Vorrichtung nach Anspruch 1 oder 2,
**dadurch gekennzeichnet,**
**dass** sich die dem inneren Kontaktband (03) zugeordnete Induktionsheizeinrichtung (07) in Transportrichtung (T) über die gesamte Länge der dem äußeren Kontaktband (04) zugeordneten Induktionsheizeinrichtung (08) erstreckt.

4. Vorrichtung nach einem der Ansprüche 1 bis 3 ,
**dadurch gekennzeichnet**,
das der Generator der die Heizspule der Induktionsheizeinrichtung (07) des inneren Kontaktbandes (03) speist dazu eingerichtet oder so mit einer Steuereinrichtung wirkverbunden ausgebildet ist, dass eine eineinhalbfache bis fünffach höhere elektrische Leistung in das innere Kontaktband (03) eingekoppelt wird, als in das äußere Kontaktband (04).

5. Vorrichtung nach einem der Ansprüche 1 bis 4,
**gekennzeichnet durch**
eine Steuereinrichtung, die die Generatoren zur Kompensation von Interferenzen zwischen den Heizspulen der Induktionsheizeinrichtungen (07, 08) statisch oder dynamisch steuernd ausgebildet ist.

6. Verfahren zur Herstellung von flexiblen Tubenkörpern für Verpackungstuben, bevorzugt mit einer Vorrichtung (01) nach einem der Ansprüche 1 bis 5, aus einem, bevorzugt auf einer Außenseite eine Bedruckung aufweisenden, Foliensubstrat (02), welches mindestens eine verschweißbare Kunststoffschicht aufweist oder aus dieser besteht und welches eine eine sich in eine Längsrichtung erstreckende erste Längsrandseite und eine hierzu parallele und beabstandete zweite Längsrandseite umfasst, wobei mit Umformmitteln das Foliensubstrat (02) zu einer Rohrform umgeformt wird und wobei die Längsrandseiten überlappend oder auf Stoß angeordnet zwischen einem äußeren und einem inneren, bevorzugt umlaufend angetriebenem, Kontaktband (03, 04) aufgenommen werden und während des Transports des Foliensubstrats (02) und/oder der Längsrandseiten zwischen den Kontaktbändern (03, 04) in einer Transportrichtung (T) eine induktive Erwärmung, bevorzugt über den Kontaktbändern (03, 04) zugeordneten Induktionsheizeinrichtungen (07, 08), der Kontaktbänder (03, 04) zur Ausbildung einer Längsschweißnaht der Längsrandseiten erfolgt,
wobei beim Transport der Längsrandseiten zwischen den Kontaktbändern (03, 04) entlang der Transportrichtung (T) wenigstens zeitweise und/oder abschnittsweise gleichzeitig eine induktive Erwärmung des inneren Kontaktbandes (03) und des äußeren Kontaktbandes (04) durch die den jeweiligen Kontaktbändern (03, 04) zugeordneten Induktionsheizeinrichtungen (07, 08) stattfindet
**dadurch gekennzeichnet,**
**dass** Heizspulen der Induktionsheizeinrichtungen (07, 08) jeweils in Resonanz als Teil eines Parallelschwingkreises betrieben werden, wobei die Resonanzfrequenzen so gewählt werden, dass sie nicht im Verhältnis von Brüchen stehen, deren Zähler und Nenner kleine ganze Zahlen aufweisen.

7. Verfahren nach Anspruch 6,
**dadurch gekennzeichnet,**
**dass** das innere Kontaktband (03) so erwärmt wird, dass es an keinem Punkt eine Temperatur aufweist, die oberhalb von 230°C liegt.

8. Verfahren nach einem der Ansprüche 6 oder 7,
**dadurch gekennzeichnet,**
**dass** durch die Induktionsheizeinrichtung (07) des inneren Kontaktbandes (03) eine zweifach bis fünffach höhere elektrische Leistung in das innere Kontaktband (03) eingekoppelt wird, als in durch die Induktionsheizeinrichtung (08) des äußeren Kontaktbandes (04) in das äußere Kontaktband (04) eingekoppelt wird.

## Claims

1. A device for producing flexible tube bodies for packaging tubes from a film substrate (02) which preferably has a print on an outer side, which has at least one weldable plastic layer or consists thereof and which comprises a first longitudinal edge side extending in a longitudinal direction and a second longitudinal edge side parallel thereto and spaced apart therefrom, the device having forming means in order to form the film substrate (02) into a tube shape and the device (01) furthermore comprising an outer (04) and an inner (03), preferably revolving, contact belt (03, 04) between which the two longitudinal edge sides are received for guiding and/or heating in order to form a longitudinal weld seam and are carried along in a transport direction (T), respective induction heating means (07, 08) assigned to the outer (04) and the inner contact belt (03) being provided,
an induction heating means (07,08) assigned to the inner contact belt (03) being disposed so as to at least partially overlap with an induction heating means (07, 08) assigned to the outer contact belt (04) in the transport direction, the induction heating means (07, 08) assigned to the inner contact belt (03) and to the outer contact belt (04) each comprising a heating coil,
**characterized in that**
the heating coils are fed by independent alternating current generators, the respective induction or heating coils each realizing a part of a parallel resonant circuit and being operated in resonance, the resonance frequencies being selected in such a manner that they are not in the ratio of fractions whose numerator and denominator have small integers.

2. The device according to claim 1,
**characterized in that**
a part of the induction heating means (07) assigned to the inner contact belt (03) is disposed in the transport direction (T) upstream of the induction heating means (08) assigned to the outer contact belt (04).

3. The device according to claim 1 or 2,
**characterized in that**
the induction heating means (07) assigned to the inner contact belt (03) extends across the entire length of the induction heating means (08) assigned to the outer contact belt (04) in the transport direction (T).

4. The device according to any one of claims 1 to 3,
**characterized in that**
the generator feeding the heating coil of the induction heating means (07) of the inner contact belt (03) is configured or operably connected to a control means in such a manner that one and a half to five times higher electrical power is coupled into the inner contact belt (03) than into the outer contact belt (04).

5. The device according to any one of claims 1 to 4,
**characterized by**
a control means realized to control the generators statically or dynamically in order to compensate for interferences between the heating coils of the induction heating means (07, 08).

6. A method for producing flexible tube bodies for packaging tubes from a film substrate (02), said method preferably having a device (01) according to any one of claims 1 to 5, said film substrate (02) preferably having a print on an outer side, having at least one weldable plastic layer or consisting thereof and comprising a first longitudinal edge side extending in a longitudinal direction and a second longitudinal edge side parallel thereto and spaced apart therefrom, the film substrate (02) being formed into a tube shape by means of forming means and the longitudinal edge sides being received in an overlapping manner or edge to edge between an outer and an inner, preferably revolving, contact belt (03, 04) and the contact belts (03, 04) being heated inductively preferably via induction heating means (07, 08) assigned to the contact belts (03, 04) during the transport of the film substrate (02) and/or the longitudinal edge sides between the contact belts (03, 04) in a transport direction (T) in order to form a longitudinal weld seam of the longitudinal edge sides,
an induction heating of the inner contact belt (03) and the outer contact belt (04) taking place simultaneously at least temporarily and/or sectionally by means of the induction heating means (07, 08) assigned to the respective contact belts (03, 04) when transporting the longitudinal edge sides between the contact belts (03, 04) along the transport direction (T),
**characterized in that**
heating coils of the induction heating means (07, 08) each being operated in resonance as part of a parallel resonant circuit, the resonance frequencies being selected in such a manner that they are not in the ratio of fractions whose numerator and denominator have small integers.

7. The method according to claim 6,
**characterized in that**
the inner contact belt (03) is heated in such a manner that it has at no point a temperature which is above 230 °C.

8. The method according to claim 6 or 7,
**characterized in that**
the induction heating means (07) of the inner contact belt (03) couples two to five times higher electrical power into the inner contact belt (03) than the induction heating means (08) of the outer contact belt (04) couples into the outer contact belt (04).

## Revendications

1. Dispositif pour produire des corps de tube flexibles pour des tubes d'emballage d'un substrat en film (02) qui a, de préférence, une impression sur un côté extérieur, qui a au moins une couche de matière plastique soudable ou consiste en celle-ci et qui comprend un premier côté de bord longitudinal s'étendant dans une direction longitudinale et un deuxième côté de bord longitudinal parallèle par rapport à et espacé de celui-ci, le dispositif (01) ayant des moyens de formage pour former le substrat en film (02) en forme de tube et le dispositif (01) comprenant en outre une courroie de contact extérieure (04) et une courroie de contact intérieure (03) qui, de préférence, tournent et entre lesquelles les deux côtés de bord longitudinaux sont reçus pour le guidage et/ou le chauffage afin de former une soudure longitudinale et sont entraînés dans une direction de transport (T), des respectifs moyens (07, 08) de chauffage par induction qui sont assignés à la courroie de contact extérieure (04) et à la courroie de contact intérieure (03) étant prévus,
un moyen (07, 08) de chauffage par induction assigné à la courroie de contact intérieure (03) étant disposé de manière à se chevaucher au moins partiellement avec un moyen (07, 08) de chauffage par induction assigné à la courroie de contact extérieure (04) dans la direction de transport, les moyens (07, 08) de chauffage par induction assignés à la courroie de contact intérieure (03) et à la courroie de contact extérieure (04) comprenant chacun une bobine de chauffage,
**caractérisé en ce que**
les bobines de chauffage sont alimentées par des alternateurs indépendants, les respectives bobines de chauffage ou d'induction réalisant chacune une partie d'un circuit résonnant parallèle et fonctionnant chacune en résonance, les fréquences de résonance étant sélectionnées de manière qu'elles ne sont pas en rapport de fractions dont le numérateur et le dénominateur ont des petits nombres entiers.

2. Dispositif selon la revendication 1,
**caractérisé en ce**
**qu'**une partie du moyen (07) de chauffage par induction assigné à la courroie de contact intérieure (03) est disposée dans la direction de transport (T) en amont du moyen (08) de chauffage par induction assigné à la courroie de contact extérieure (04).

3. Dispositif selon la revendication 1 ou 2,
**caractérisé en ce que**
le moyen (07) de chauffage par induction assigné à la courroie de contact intérieure (03) s'étend dans la direction de transport (T) sur toute la longueur du moyen (08) de chauffage par induction assigné à la courroie de contact extérieure (04).

4. Dispositif selon l'une quelconque des revendications 1 à 3,
**caractérisé en ce que**
le générateur qui alimente le moyen (07) de chauffage par induction de la courroie de contact intérieure (03) est configuré ou relié fonctionnellement à un moyen de contrôle de telle manière qu'une puissance électrique une fois et demie à cinq fois supérieure est couplée dans la courroie de contact intérieure (03) que dans la courroie de contact extérieure (04).

5. Dispositif selon l'une quelconque des revendications 1 à 4,
**caractérisé par** un moyen de contrôle réalisé pour contrôler les générateurs statiquement ou dynamiquement afin de compenser des interférences entre les bobines de chauffage des moyens (07, 08) de chauffage par induction.

6. Procédé pour produire des corps de tube flexibles pour des tubes d'emballage d'un substrat en film (02), ledit procédé, de préférence, ayant un dispositif (01) selon l'une quelconque des revendications 1 à 5, ledit substrat en film (02) ayant, de préférence, une impression sur un côté extérieur, ayant au moins une couche de matière plastique soudable ou consistant en celle-ci et comprenant un premier côté de bord longitudinal s'étendant dans une direction longitudinale et un deuxième côté de bord longitudinal parallèle par rapport à et espacé de celui-ci, le substrat en film (02) étant formé en forme de tube au moyen de moyens de formage et les côtés de bord longitudinaux étant reçus de manière à se chevaucher ou bord à bord entre une courroie de contact extérieure (04) et une courroie de contact intérieure (03) qui, de préférence, tournent et les courroies de contact (03, 04) étant chauffées par induction, de préférence, via des moyens (07, 08) de chauffage par induction assignés aux courroies de contact (03, 04) pendant le transport du substrat en film (02) et/ou des côtés de bord longitudinaux entre les courroies de contact (03, 04) dans une direction de transport (T) afin de former une soudure longitudinale des côtés de bord longitudinaux,
un chauffage par induction de la courroie de contact intérieure (03) et la courroie de contact extérieure (04) ayant lieu simultanément au moins temporairement et/ou par sections au moyen des moyens (07, 08) de chauffage par induction assignés aux respectives courroies de contact (03, 04) pendant le transport des côtés de bord longitudinaux entre les courroies de contact (03, 04) le long de la direction de transport (T),
**caractérisé en ce que**
des bobines de chauffage des moyens (07, 08) de chauffage par induction fonctionnant chacune en résonance comme partie d'un circuit résonnant parallèle, les fréquences de résonance étant sélectionnées de manière qu'elles ne sont pas en rapport de fractions dont le numérateur et le dénominateur ont des petits nombres entiers.

7. Procédé selon la revendication 6,
**caractérisé en ce que**
la courroie de contact intérieur (03) est chauffée de manière qu'elle n'a en aucun point une température supérieure à 230 °C.

8. Procédé selon la revendication 6 ou 7,
**caractérisé en ce que**
le moyen (07) de chauffage par induction de la courroie de contact intérieure (03) couple dans la courroie de contact intérieure (03) une puissance électrique deux à cinq fois supérieure à celle couplée dans la courroie de contact extérieure (04) par le moyen (08) de chauffage par induction de la courroie de contact extérieure (04).
